# FASCICULE DE BREVET EUROPEEN

(11) **EP 1 010 886 B1**
(45) Date de publication et mention de la délivrance du brevet: **15.09.2004**
(21) Numéro de dépôt: 99403014.6
(22) Date de dépôt: 03.12.1999
(51) Int. Cl.: F02M 21/02, F02M 63/02, F02M 55/02

(54) **Circuit d'injection perfectionné**
Verbessertes Einspritzsystem
Improved fuel injection system

(30) Priorité: 15.12.1998 FR 9815802
(43) Date de publication de la demande: 21.06.2000
(73) Titulaire: Renault s.a.s., 92100 Boulogne Billancourt (FR)
(72) Inventeur: Blanchard, Eric, 92380 Garches (FR); Muraz, Jérome, 75015 Paris (FR); Lacome, Pierre, 92410 Ville D'Avray (FR)
(74) Mandataire: Srour, Elie

(56) Documents cités:
- EP-A- 0 964 153
- DE-A- 19 604 552
- DE-A- 19 611 434
- US-A- 5 074 272
- US-A- 5 537 980
- US-A- 5 626 294
- US-A- 5 755 210

## Description

L'invention concerne un circuit d'injection de carburant.

L'invention concerne plus particulièrement un circuit d'injection de carburant pour le moteur d'un véhicule automobile, du type qui comporte, montés en série d'amont en aval, un circuit basse pression qui comporte un réservoir et une pompe basse pression, et un circuit haute pression dans lequel une pompe à haute pression alimente des injecteurs électromagnétiques par l'intermédiaire d'une rampe d'injection, du type dans lequel les injecteurs électromagnétiques sont reliés à des premières sorties de la rampe d'injection, du type dans lequel au moins une première électrovanne est interposée dans le circuit haute pression, pour déterminer un état actif du circuit associé au fonctionnement du moteur, ou pour déterminer un état inactif du circuit associé à l'arrêt du moteur, du type dans lequel le circuit d'injection comporte un régulateur de pression qui, dans l'état actif du circuit uniquement, met en communication le circuit haute pression avec un conduit de retour de carburant pour permettre le retour du carburant vers le réservoir du véhicule.

On connaît de nombreux exemples de circuits d'injection de carburant.

Conventionnellement, il s'agit de circuits dans lesquels circule un carburant liquide tel que du supercarburant ou du gazole. Un tel carburant présente l'avantage de posséder un point d'ébullition généralement situé au dessus de la température ambiante, ce qui permet de réaliser facilement et à moindre frais l'étanchéité des circuits considérés.

Dans le cadre de l'adaptation de tels circuits à l'utilisation de carburants comme le Gaz de Pétrole Liquéfié, communément appelé "GPL", ou comme le Diméthyl Éther, communément appelé "DME", qui possèdent un point d'ébullition bas, de l'ordre de -25°C, se pose le problème de l'étanchéité des circuits.

En effet, les carburants très volatiles, comme le GPL ou le DME, sont susceptibles, lors de l'arrêt du moteur, de fuir au niveau des injecteurs et de pénétrer dans les chambres de combustion du moteur. L'accumulation du carburant dans les chambres de combustion augmente notablement la richesse du mélange qui se trouve dans les chambres au moment du redémarrage du moteur, ce qui d'une part nuit au redémarrage du moteur, et d'autre part provoque une pollution importante.

Par ailleurs, le GPL et le DME sont des carburants à fort coefficient de dilatation, qui, lorsqu'ils passent de l'état liquide à l'état gazeux, multiplient leur volume par un facteur proche de 300. Or, le DME est un carburant plus instable que le GPL. Aussi, une fuite minime de DME dans les chambres de combustion pourrait risquer de provoquer une explosion qui risquerait de détériorer le moteur lors du démarrage suivant.

Une première solution au problème de la fuite des injecteurs a déjà été proposée pour des circuits de carburant destinés à prendre place dans des véhicules de grande dimensions. Cette solution consiste en un circuit qui, à l'arrêt du moteur, récupère le carburant résiduel issu des injecteurs et le piège dans un filtre à charbon actif, aussi appelé "canister". Dans certains modes de réalisation de cette solution, le carburant est restitué à l'entrée d'air du moteur lors du redémarrage. Cette solution présente l'inconvénient de nécessiter un canister de fort volume, puisque le volume de gaz issu des injecteurs, est généralement important. Par ailleurs, le canister doit être à même d'absorber un volume de gaz correspondant à plusieurs arrêts du moteur, ce qui est par exemple le cas lorsque le conducteur change d'avis en cours de démarrage et que le moteur est soumis à plusieurs séquences de démarrage. Ceci rend le canister d'une taille inappropriée à son implantation dans un véhicule particulier.

Une deuxième solution a été prévue pour un circuit d'injection comportant des injecteurs à commande mécanique. Ce type de circuit comporte des injecteurs qui sont chacun commandés par une vanne mécanique qui est actionnée par du carburant sous pression. Dans un tel circuit, il est possible de purger chaque injecteur en purgeant la vanne de commande associée, le carburant purgé étant acheminé vers le réservoir principal du véhicule par l'intermédiaire d'un conduit de retour de carburant, dans lequel est interposé un réservoir auxiliaire et un compresseur destiné à permettre la recompression et la liquéfaction des gaz avant leur réintroduction dans le réservoir principal.

Ce circuit, quoique moins encombrant que le précédent, ne peut être monté sur un véhicule particulier, le réservoir supplémentaire prenant beaucoup de place. De plus, il est limité à l'utilisation d'injecteurs mécaniques, dont le fonctionnement est moins précis que celui d'injecteurs électromagnétiques.

Le document US-A-5.626.294 décrit un système d'injection comportant des injecteurs électromagnétiques sur lesquels sont agencés des conduits de retour de carburant, mais qui, de manière conventionnelle, ne sont susceptibles de permettre le retour du carburant vers le réservoir du véhicule que lorsque le moteur est en marche.

Le document DE-A-196.04.552 décrit et représente un système d'injection comportant une rampe d'injection qui est reliée à un moyen de régulation de pression qui est susceptible de provoquer l'arrêt du moteur en faisant chuter la pression dans la rampe d'injection et en organisant le retour du carburant vers le réservoir du véhicule que lorsque le moteur est en marche. Toutefois, ce système ne prévoit aucun moyen de régulation de pression lorsque le moteur est arrêté.

Le document DE-A-196.11.434 décrit et représente un système d'injection dans lequel, d'une part, une électrovanne de décharge est susceptible, lorsque le moteur est en fonctionnement, d'organiser un retour du carburant en surpression dans les injecteurs vers un réservoir intermédiaire relié à un réservoir principal du système d'injection, et dans lequel d'autre part, une autre électrovanne est susceptible, lorsque le moteur est à l'arrêt, d'organiser un retour du carburant en surpression dans une rampe d'alimentation desdits injecteurs directement dans le réservoir principal.

Une telle conception présente l'inconvénient d'être particulièrement encombrante puisqu'elle nécessite deux circuits distincts d'évacuation des surpressions associés chacun respectivement au fonctionnement ou à l'arrêt du moteur.

Le document US-A-5.537.980 décrit et représente un système d'injection comportant une rampe d'injection qui est reliée à un moyen mécanique de régulation de pression, commandé par la persistance d'une pression résiduelle dans la rampe d'injection, qui est susceptible d'organiser le retour du carburant vers le réservoir du véhicule lorsque le moteur arrêté. Un tel système d'injection ne permet que de limiter la pression au delà d'un seuil déterminé et non d'éliminer toute pression résiduelle, et ne peut de ce fait être adapté à l'usage de carburant volatils tels que le DME ou le GPL.

Le document EP-0.964.153 décrit et représente un système d'injection comportant un accumulateur de carburant sous pression qui peut être relié au carburant par une soupape mécanique dont l'ouverture est déterminée par le dépassement d'un seuil de pression dans l'accumulateur ou par une pression fournie par un dispositif indépendant commandé. Toutefois ce système n'est pas spécifiquement dédié à l'évacuation d'une surpression de carburant lorsque le moteur à l'arrêt.

Pour résoudre les inconvénients susmentionnés, l'invention propose un circuit d'injection perfectionné permettant la purge du circuit haute pression adapté au DME ou au GPL à l'aide d'un circuit de conception simple quand le moteur est à l'arrêt.

Dans ce but, l'invention propose un circuit d'injection du type précédemment décrit, caractérisé en ce que le circuit d'injection comporte, parallèlement au régulateur de pression, un circuit de dérivation qui comporte une deuxième électrovanne, laquelle électrovanne, dans l'état inactif du circuit uniquement, met en communication le circuit haute pression et le conduit de retour de carburant pour faire chuter une pression résiduelle de carburant dans le circuit haute pression.

Selon d'autres caractéristiques de l'invention :
- le régulateur de pression est interposé entre une deuxième sortie de la rampe d'injection et le conduit de retour de carburant ;
- le circuit de dérivation est relié à la deuxième sortie de la rampe d'injection et au conduit de retour de carburant, et il est agencé en parallèle au régulateur de pression ;
- le circuit de dérivation comporte un clapet anti-retour agencé entre la deuxième électrovanne et le conduit de retour de carburant ;
- la première électrovanne est interposée entre la pompe haute pression et la rampe d'injection ;
- les première et deuxième électrovannes constituent une vanne à quatre voies;
- le carburant est du gaz de pétrole liquéfié ;
- le régulateur de pression est interposé entre une sortie de la pompe haute pression et le conduit de retour de carburant ;
- le circuit de dérivation est relié à une entrée amont de la rampe d'injection et au conduit de retour de carburant ;
- le circuit de dérivation est relié aux premières sorties aval de la rampe d'injection et au conduit de retour de carburant ;
- chaque injecteur comporte une sortie qui, uniquement dans l'état actif du circuit, est susceptible d'être reliée au conduit de retour de carburant ;
- le carburant comporte du diméthyl éther ;
- le fonctionnement de la deuxième électrovanne est associé et contraire à celui de la première électrovanne ;
- le conduit de retour de carburant comporte un clapet anti-retour permettant le passage du carburant uniquement en direction du réservoir ;
- la deuxième électrovanne du circuit de dérivation est agencée à proximité immédiate de la rampe d'injection et des injecteurs pour que la chaleur vaporise le carburant lors de l'ouverture de la deuxième électrovanne.

D'autres caractéristiques et avantages de l'invention apparaîtront à la lecture de la description détaillée qui suit pour la compréhension de laquelle on se reportera aux dessins annexés dans lesquels :
- la figure 1 est un schéma de principe d'un circuit d'injection selon l'invention plus particulièrement adapté pour fonctionner avec du GPL ;
- la figure 2 est un schéma de principe d'un circuit d'injection selon l'invention plus particulièrement adapté pour fonctionner avec du DME ;
- la figure 3 est un schéma selon la figure 2 d'un deuxième mode de réalisation de l'invention plus particulièrement adapté pour fonctionner avec du DME.

Dans la description qui va suivre, des chiffres de référence identiques désignent des pièces identiques ou ayant des fonctions similaires.

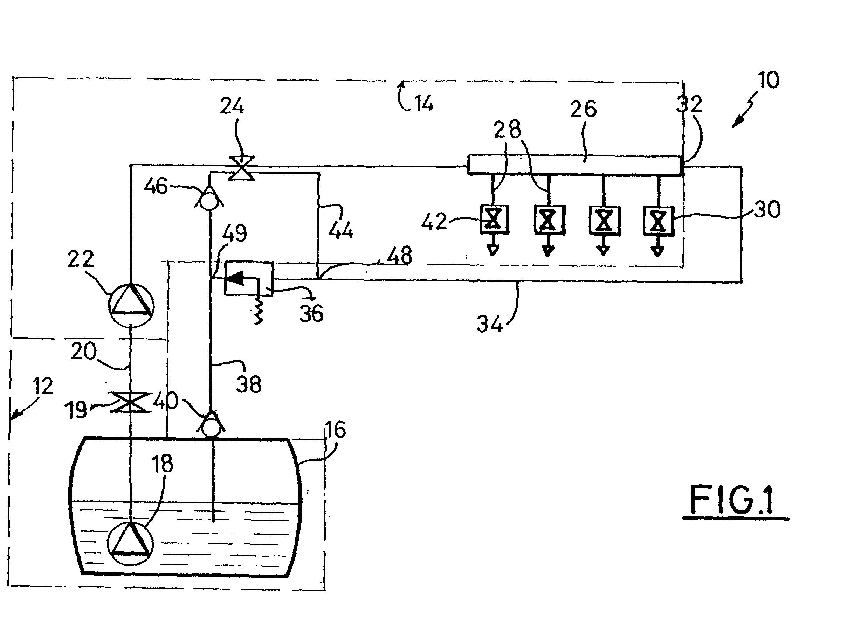

On a représente sur la figure 1 l'ensemble d'un circuit 10 d'injection de carburant pour un moteur de véhicule automobile (non représenté) fonctionnant au gaz de pétrole liquéfié (GPL). Le circuit 10 est par exemple un circuit d'injection "indirecte multipoint", c'est à dire qu'il comporte au moins autant d'injecteurs que de chambres de combustion du moteur associé, et que ces injecteurs débitent le carburant dans chacune des tubulures d'admission (non représentées) alimentant les chambres de combustion du moteur associé.

Cette configuration n'est pas limitative de l'invention, et, en variante (non représentée) le circuit 10 pourrait aussi être un circuit d'injection "indirecte monopoint" dans lequel un injecteur unique débiterait le carburant simultanément dans toutes les tubulures d'admission, ou encore être un circuit d'injection "directe multipoint", c'est à dire comportant au moins autant d'injecteurs que de chambres de combustion du moteur associé, ces injecteurs débitant le carburant directement dans chacune des chambres de combustion du moteur associé.

De manière connue, un tel circuit 10 comporte, montés en série et d'amont en aval, un circuit basse pression 12 et un circuit haute pression 14. Le circuit basse pression 12 comporte un réservoir de carburant 16 dans lequel peut être stocké du GPL à l'état liquide, une pompe basse pression 18, qui est conventionnellement immergée dans le réservoir 16 de GPL, une électrovanne 19 du circuit basse pression, et un conduit de sortie 20 qui relie la pompe basse pression 18 du réservoir 16 au circuit haute pression 14 pour son alimentation en carburant.

Le circuit haute pression 14 comporte, d'amont en aval, une pompe haute pression 22, une première électrovanne 24 et une rampe d'injection 26 dont des premières sorties 28 sont reliées à des injecteurs électromagnétiques 30. Une deuxième sortie 32 de la rampe d'injection 26 est reliée par l'intermédiaire d'une canalisation 34 à un régulateur de pression 36 qui est susceptible de mettre en communication le circuit haute pression 14 avec un conduit 38 de retour de carburant qui plonge dans le réservoir de carburant 16. Le conduit 38 de retour de carburant comporte un clapet anti-retour 40 qui ne peut laisser passer le carburant que dans le sens menant au réservoir 16 de carburant.

Le circuit 10 est commandé par l'ouverture de l'électrovanne 19 du circuit de basse pression et de la première électrovanne 24 du circuit haute pression 14.

Ainsi, lorsque les électrovannes 19 et 24 sont ouvertes, la pompe basse pression 18 du circuit basse pression 12 et la pompe haute pression 22 du circuit haute pression 14 entrent simultanément en fonctionnement et débitent du GPL dans le circuit 10 d'injection. Des électrovannes internes 42 des injecteurs 30, qui permettent la régulation du débit de carburant dans les chambres de combustion (non représentées) du moteur, sont ouvertes à des instants précis pour que le GPL soit débité dans les chambres de combustion. Une haute pression de carburant est alors établie entre la pompe haute pression 22 et le régulateur de pression 36 dans tout le circuit haute pression 14.

Conventionnellement, le débit de la pompe haute pression 22 est supérieur au débit maximum que la rampe d'injection 26 est susceptible de requérir pour l'alimentation des injecteurs 30. Le débit en excès est évacué de la rampe d'injection 26 par la deuxième sortie 32 de la rampe d'injection 26.

La canalisation 34, branchée sur la deuxième sortie 32 de la rampe d'injection 26, relie le circuit haute pression 14 au conduit de retour de carburant 38 en permettant, par l'intermédiaire du régulateur de pression 36, l'évacuation du débit de GPL en excès.

Le régulateur de pression 36 est taré de façon à ce que, pour une pression supérieure à la pression d'injection, correspondant à une accumulation de GPL en excès, il mette en communication le circuit haute pression 14 et le conduit 38 de retour de carburant. De la sorte, les différents éléments du circuit 10 d'injection ne peuvent pas être détériorés.

Les électrovannes 19 et 24 déterminent sensiblement deux états, un état inactif du circuit 10 d'injection, dans lequel le moteur est à l'arrêt, et un état actif du circuit d'injection 10, dans lequel le GPL liquide est pompé sous pression jusqu'aux injecteurs 30 pour alimenter les chambres de combustion du moteur en fonctionnement.

Lors du passage de l'état actif du circuit d'injection 10 à son état inactif correspondant à l'arrêt du moteur, la première électrovanne 24 est fermée, les électrovannes internes 42 de chacun des injecteurs 30 sont fermées et la haute pression contenue dans le circuit haute pression 14 chute progressivement du fait de l'arrêt des pompes basses et haute pression 18 et 22. A un moment donné, la pression dans le circuit haute pression 14 passe en dessous d'un seuil pour lequel le régulateur de pression 36 se ferme. Il subsiste alors dans le circuit haute pression une pression résiduelle de carburant car la première électrovanne 24 est fermée. Cette pression est légèrement inférieure à la pression d'injection mais très nettement supérieure à la pression du circuit basse pression.

Conformément à l'invention, un circuit de dérivation 44 permet d'éviter que la pression résiduelle dans le circuit haute pression 14 n'entraîne une fuite des injecteurs 30.

Le circuit de dérivation 44 est relié à la canalisation 34 et au conduit 38 de retour de carburant. De la sorte, il relie indirectement la deuxième sortie 32 de la rampe d'injection au conduit 38 de retour de carburant. Dans le mode de réalisation de l'invention représenté à la figure 1, le conduit de dérivation 44 est monté parallèlement au régulateur de pression 36, ses extrémités étant respectivement reliées à l'entrée 48 et à la sortie 49 du régulateur de pression 36.

Le circuit de dérivation comporte une deuxième électrovanne qui fait avantageusement partie de la première électrovanne 24. La première électrovanne 24 est donc une électrovanne double à deux entrées et deux sorties, aussi appelée "électrovanne quatre voies", dont chaque partie fonctionne contrairement à l'autre. En effet, la première électrovanne 24, dans l'état inactif du circuit 10, interrompt la circulation du carburant en amont de la rampe d'injection 26, mais permet la circulation du carburant en aval de la rampe d'injection 26, c'est à dire dans le conduit de dérivation 44 et parallèlement au régulateur de pression 36. Réciproquement, dans l'état actif du circuit, la première électrovanne 24, permet la circulation du carburant en amont de la rampe d'injection 26, mais interrompt la circulation du carburant en aval de la rampe d'injection 26 dans le conduit de dérivation 44.

Ainsi, lorsque le circuit d'injection 10 passe de son état actif à son état inactif, la pression résiduelle dans le circuit haute pression 14 chute du fait de la mise en communication du circuit haute pression 14 au réservoir 16 par l'intermédiaire du conduit de dérivation 44 et du conduit de retour de carburant 38.

Avantageusement, le circuit de dérivation 44 comporte un clapet anti-retour 46 qui est agencé en aval et à proximité immédiate de la première électrovanne 24. Ce clapet anti-retour 46 permet d'éviter que du GPL à la pression du réservoir ne retourne dans la rampe d'injection 26. En effet, lorsque l'électrovanne 24 met en communication le circuit haute pression 14 et le conduit de retour de carburant 38 par l'intermédiaire du conduit de dérivation 44, la pression du GPL dans le circuit haute pression chute jusqu'à ce qu'il devienne gazeux. Or, une partie du GPL contenu dans le réservoir 16 l'est sous forme gazeuse. L'absence de conduit anti-retour risquerait de provoquer un mouvement inverse de GPL dans le circuit de dérivation 44, la pression du GPL gazeux issu du réservoir pouvant être supérieure à celle du GPL issu de la vaporisation du GPL du circuit haute pression 14. Le clapet anti-retour 46 évite que le GPL n'emprunte le circuit de dérivation 44 pour retourner dans la rampe d'injection 26.

La vaporisation du GPL lors du passage de l'état actif à l'état inactif du circuit 10 est encore améliorée par le choix de l'emplacement des organes du circuit 10.

En effet, dans le mode de réalisation préféré de l'invention, la canalisation 34 est aussi courte que possible de façon à ce que l'entrée 48 du régulateur de pression, et donc du circuit de dérivation 44, soit agencée le plus près possible de la rampe d'injection 26. En effet, plus l'électrovanne 24 est à proximité de la rampe d'injection 26 et des injecteurs 30, plus le GPL contenu dans la rampe d'injection 26 est susceptible de se détendre et de se vaporiser. Ceci permet d'acheminer le GPL sans pompage à travers le circuit de dérivation 44 jusqu'au réservoir 16.

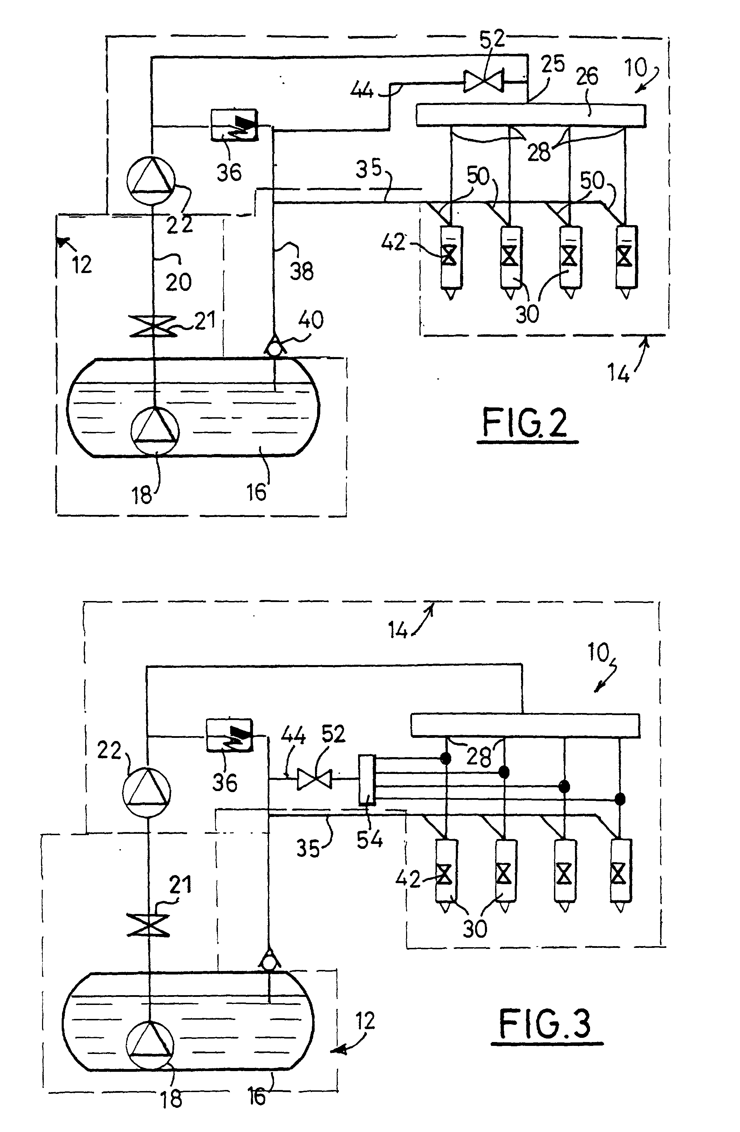

On a représenté sur la figure 2 un circuit d'injection 10 plus particulièrement adapté au DME. Le circuit 10 peut indifféremment être un circuit d'injection directe ou un circuit d'injection indirecte.

D'une manière analogue à celle précédemment décrite en référence à la figure 1, le circuit d'injection 10 comporte un circuit basse pression 12, comportant d'amont en aval un réservoir 16, une pompe basse pression 18, une première électrovanne 21 de circuit basse pression, et un conduit de sortie 20. Le circuit basse pression 12 alimente un circuit haute pression 14 qui comporte, d'amont en aval, une pompe haute pression 22 et une rampe d'injection 26 dont des sorties 28 alimentent des injecteurs 30 commandés par des électrovannes internes 42. Chaque injecteur 30 comporte une canalisation de retour 50 qui est reliée à une canalisation 35 et qui permet, dans l'état actif du circuit 10 uniquement, le retour du DME en excès vers la canalisation 38 de retour de carburant. Similairement à la canalisation 38 décrite en référence à la figure 1, la canalisation de retour de carburant 38 comporte un clapet anti-retour 40 qui permet le passage du DME uniquement dans le sens menant au réservoir de carburant 16.

Dans le cas du circuit d'injection destiné au DME, la première électrovanne 21 de circuit basse pression est une électrovanne simple à une entrée et une sortie, passante dans l'état actif du circuit 10, et non passante dans l'état inactif du circuit 10. Par ailleurs, à la différence du régulateur de pression d'un circuit d'injection au GPL, le régulateur de pression 36 est interposé entre la sortie de la pompe haute pression 22 et la canalisation 38 de retour de carburant.

Lorsque le circuit d'injection 10 est dans son état actif, le DME est pompé du circuit basse pression 12 au circuit haute pression 14 et le DME en excès au niveau des injecteurs 30 retourne dans le réservoir 16 en cheminant par les conduits de sortie 50, la canalisation 35, et le conduit de retour de carburant 38. Lorsque le circuit d'injection 10 passe de son état actif à son état inactif, la première électrovanne 21 est fermée, les électrovannes internes 42 sont fermées, et une haute pression subsiste dans le circuit haute pression 14 entre la pompe haute pression 22 et les injecteurs 30, les conduits de sortie 50 ne permettent plus le passage du DME dans l'état inactif du circuit d'injection 10.

Pour éviter que du DME sous haute pression ne subsiste dans le circuit haute pression 14, un circuit de dérivation 44 est monté entre une entrée 25 en amont de la rampe d'injection 26 et le conduit de retour de carburant 38. Le circuit de dérivation 44 comporte une deuxième électrovanne 52 qui, similairement à la deuxième électrovanne décrite précédemment en référence à la figure 1, est d'un fonctionnement contraire à la première électrovanne 21 de circuit basse pression, de sorte que lorsque la première électrovanne 21 est fermée, la deuxième électrovanne 52 est ouverte et permet de faire chuter la pression de DME dans le circuit haute pression. Le carburant contenu dans la rampe d'injection 26 et dans les injecteurs 30 est alors à même de se vaporiser sous l'effet de la chaleur et de retourner dans le réservoir 16. Le clapet anti-retour 40 permet, de la même façon que précédemment, d'empêcher que le DME gazeux du réservoir 16 ne reparte en sens inverse dans le conduit de dérivation 44.

La figure 3 illustre un mode de réalisation en variante du circuit d'injection 10 précédent, dans lequel la deuxième électrovanne 52 est reliée aux premières sorties 28 de la rampe d'injection 26 d'une part, et au conduit de retour de carburant 38 d'autre part, en parallèle à la canalisation 35.

En effet, dans ce mode de réalisation, un collecteur 54 est relié, en aval de la rampe d'injection 26, à chacune des sorties 28 de la rampe d'injection 26, entre la rampe d'injection 26 et les injecteurs 30. Le collecteur 54 est alimenté par la deuxième électrovanne 52 pour permettre, dans l'état inactif du circuit d'injection 10 l'évacuation du DME contenu dans le circuit haute pression.

Ce mode de réalisation est particulièrement avantageux, car il permet d'alimenter le circuit de dérivation 44 avec du DME contenu dans les parties les plus chaudes du circuit d'injection 10, c'est à dire la rampe d'injection 16 et les injecteurs 30, ce qui favorise grandement sa vaporisation et son évacuation. Cette configuration est particulièrement adaptée au cas d'un moteur fonctionnant au DME.

Avantageusement, quel que soit le type de carburant utilisé, GPL ou DME, l'invention permet de ne laisser subsister, dans la rampe d'injection et dans les injecteurs, qu'une très petite quantité de carburant à l'état gazeux, ce qui réduit considérablement les risques de fuite au niveau des injecteurs 30, et par conséquent évite que du carburant ne s'introduise dans les chambres de combustion du moteur (o, représentées. L'invention permet ainsi de faciliter les redémarrages ultérieurs du moteur, de réduire la pollution, et de prévenir, surtout dans le cas de l'utilisation du DME comme carburant, les risques d'explosion.

## Revendications

1. Circuit (10) d'injection de carburant pour le moteur d'un véhicule automobile, du type qui comporte, montés en série d'amont en aval, un circuit basse pression (12) qui comporte un réservoir (16) et une pompe basse pression (18), et un circuit haute pression (14) dans lequel une pompe à haute pression (22) alimente des injecteurs (30, 42) électromagnétiques par l'intermédiaire d'une rampe d'injection (26), du type dans lequel les injecteurs électromagnétiques (30,42) sont reliés à des premières sorties (28) de la rampe d'injection (26), du type dans lequel au moins une première électrovanne (19, 21, 24) est interposée dans le circuit (10), pour déterminer un état actif du circuit (10) associé au fonctionnement du moteur, ou pour déterminer un état inactif du circuit (10) associé à l'arrêt du moteur, du type dans lequel le circuit d'injection (10) comporte un régulateur de pression (36) qui, dans l'état actif du circuit uniquement, met en communication le circuit haute pression (14) avec un conduit de retour (38) de carburant pour permettre le retour du carburant vers le réservoir (16) du véhicule,
**caractérisé en ce qu'**il comporte, parallèlement au régulateur de pression (36), un circuit de dérivation (44) qui comporte une deuxième électrovanne (24, 52), laquelle électrovanne, dans l'état inactif du circuit (10) uniquement, met en communication le circuit haute pression (14) et le conduit de retour (38) de carburant pour faire chuter une pression résiduelle de carburant dans le circuit haute pression (14).

2. Circuit d'injection (10) selon la revendication 1, **caractérisé en ce que** le régulateur de pression (36) est interposé entre une deuxième sortie (32) de la rampe d'injection (26) et le conduit de retour (38) de carburant.

3. Circuit d'injection (10) selon la revendication 2, **caractérisé en ce que** le circuit de dérivation (44) est relié à la deuxième sortie (32) de la rampe d'injection (26) et au conduit de retour (38) de carburant, et **en ce qu'**il est agencé en parallèle au régulateur de pression (36).

4. Circuit d'injection (10) selon la revendication 3, **caractérisé en ce que** le circuit de dérivation (44) comporte un clapet anti-retour (46) agencé entre la deuxième électrovanne et le conduit de retour (38) de carburant.

5. Circuit d'injection (10) selon l'une quelconque des revendications précédentes, **caractérisé en ce que** la première électrovanne (24) est interposée entre la pompe haute pression (22) et la rampe d'injection (26).

6. Circuit d'injection (10) selon la revendication 5, **caractérisé en ce que** les première et deuxième électrovannes constituent une vanne (24) à quatre voies.

7. Circuit d'injection (10) selon l'une quelconque des revendications 1 à 6, **caractérisé en ce que** le carburant est du gaz de pétrole liquéfié.

8. Circuit d'injection (10) selon la revendication 1, **caractérisé en ce que** le régulateur de pression (36) est interposé entre une sortie de la pompe haute pression (22) et le conduit de retour (38) de carburant.

9. Circuit d'injection (10) selon la revendication 8, **caractérisé en ce que** le circuit de dérivation (44) est relié à une entrée amont (25) de la rampe d'injection (26) et au conduit de retour (38) de carburant.

10. Circuit d'injection (10) selon la revendication 8, **caractérisé en ce que** le circuit de dérivation (44) est relié aux premières sorties aval (28) de la rampe d'injection (26) et au conduit de retour (38) de carburant.

11. Circuit d'injection (10) selon l'une quelconque des revendications 8 à 10, **caractérisé en ce que** chaque injecteur (30) comporte une sortie (50) qui, uniquement dans l'état actif du circuit, est susceptible d'être reliée au conduit de retour (38) de carburant.

12. Circuit d'injection (10) selon l'une quelconque des revendications 8 à 11, **caractérisé en ce que** le carburant comporte du diméthyl éther.

13. Circuit d'injection (10) selon l'une quelconque des revendications précédentes, **caractérisé en ce que** le fonctionnement de la deuxième électrovanne (24, 52) est associé et contraire à celui de la première électrovanne (24, 21).

14. Circuit d'injection (10) selon l'une quelconque des revendications précédentes, **caractérisé en ce que** le conduit de retour (38) de carburant comporte un clapet anti-retour (40) permettant le passage du carburant uniquement en direction du réservoir (16).

15. Circuit d'injection (10) selon l'une quelconque des revendications précédentes, **caractérisé en ce que** la deuxième électrovanne (24, 52) du circuit de dérivation est agencée à proximité immédiate de la rampe d'injection (26) et des injecteurs (30) pour que la chaleur vaporise le carburant lors de l'ouverture de la deuxième électrovanne (24,52).

## Patentansprüche

1. Kreis (10) zur Einspritzung von Kraftstoff für den Motor eines Kraftfahrzeugs, von der Bauart, die umfasst, montiert in Reihe stromauf- bis stromabwärts, einen Niederdruckkreis (12), welcher einen Tank (16) und eine Niederdruckpumpe (18) aufweist und einen Hochdruckkreis (14), in welchem eine Hochdruckpumpe (22) elektromagnetische Einspritzer (30, 42) versorgt über eine Einspritzleitung (26), von der Bauart, in welcher die elektromagnetischen Einspritzer (30, 42) verbunden sind mit ersten Ausgängen (28) der Einspritzleitung (26), von der Bauart, von welcher mindestens ein erstes Elektroventil (19, 21, 24) in dem Kreis (10) eingesetzt ist, um einen aktiven Zustand des Kreises (10) zu bestimmen, der dem Betrieb des Motors zugeordnet ist, oder um einen inaktiven Zustand des Kreises (10) zu bestimmen, der dem Anhalten des Motors zugeordnet ist, von der Bauart, von welcher der Injektionskreis (10) einen Druckregler (36) aufweist, welcher, allein in dem aktiven Zustand des Kreises, den Hochdruckkreis (14) mit dem Rückflusskreis (38) des Kraftstoffs in Verbindung setzt, um den Rückfluss von Kraftstoff zu dem Tank (16) des Fahrzeugs zu erlauben,
**dadurch gekennzeichnet, dass** er parallel zu dem Druckregler (36), einen Ableitungskreis (44) aufweist, welcher einen zweites Elektroventil (24, 52) aufweist, wobei das Elektroventil, allein in dem inaktiven Zustand des Kreises (10), den Hochdruckkreis (14) und den Rückflusskreis (38) des Kraftstoffs in Verbindung setzt, um einen residuellen Druck des Kraftstoffs in dem Hochdruckkreis (14) zu senken.

2. Einspritzkreis (10) gemäß Anspruch 1, **dadurch gekennzeichnet, dass** der Druckregler (36) zwischen einem zweiten Ausgang (32) der Einspritzleitung (26) und der Rückflussleitung (38) des Kraftstoffs eingesetzt ist.

3. Einspritzkreis (10) gemäß Anspruch 2, **dadurch gekennzeichnet, dass** der Ableitungskreis (44) verbunden ist mit dem zweiten Ausgang (32) der Einspritzleitung (26) und der Rückflussleitung (38) des Kraftstoffs, und dadurch, dass er parallel zu dem Druckregler (36) angeordnet ist.

4. Einspritzkreis (10) gemäß Anspruch 3, **dadurch gekennzeichnet, dass** der Ableitungskreis (44) ein Rückschlagventil (46) aufweist, das zwischen dem zweiten Elektroventil und der Rückflussleitung (38) des Kraftstoffs angeordnet ist.

5. Einspritzkreis (10) gemäß einem der vorhergehenden Ansprüche, **dadurch gekennzeichnet, dass** das erste Elektroventil (24) zwischen der Hochdruckpumpe (22) und der Einspritzleitung (26) eingesetzt ist.

6. Einspritzkreis (10) gemäß Anspruch 5, **dadurch gekennzeichnet, dass** die ersten und zweiten Elektroventile ein Vierwegeventil (24) bilden.

7. Einspritzkreis (10) gemäß einem der Ansprüche 1 bis 6, **dadurch gekennzeichnet, dass** der Kraftstoff aus Flüssiggas ist.

8. Einspritzkreis (10) gemäß Anspruch 1, **dadurch gekennzeichnet, dass** der Druckregler (36) zwischen einem Ausgang der Hochdruckpumpe (22) und der Rückflussleitung (38) des Kraftstoffs eingesetzt ist.

9. Einspritzkreis (10) gemäß Anspruch 8, **dadurch gekennzeichnet, dass** der Ableitungskreis (44) verbunden ist mit einem Eingang (25) stromaufwärts von der Einspritzleitung (26) und einer Rückflussleitung (38) des Kraftstoffs.

10. Einspritzkreis (10) gemäß Anspruch 8, **dadurch gekennzeichnet, dass** der Ableitungskreis (44) verbunden ist mit ersten Ausgängen (28) stromabwärts von der Einspritzleitung (26) und mit der Rückflussleitung (38) des Kraftstoffs.

11. Einspritzkreis (10) gemäß einem der Ansprüche 8 bis 10, **dadurch gekennzeichnet, dass** jeder Einspritzer (30) einen Ausgang (50) aufweist, welcher, allein in dem aktiven Zustand des Kreises, imstande ist, mit der Rückflussleitung (38) des Kraftstoffs verbunden zu werden.

12. Einspritzkreis (10) gemäß einem der Ansprüche 8 bis 11, **dadurch gekennzeichnet, dass** der Kraftstoff Dimethylether beinhaltet.

13. Einspritzkreis (10) gemäß einem der vorhergehenden Ansprüche, **dadurch gekennzeichnet, dass** der Betrieb des zweiten Elektroventils (24, 52) verbunden und entgegengesetzt zu dem des ersten Elektroventils (24, 21) ist.

14. Einspritzkreis (10) gemäß einem der vorhergehenden Ansprüche, **dadurch gekennzeichnet, dass** die Rückflussleitung (38) des Kraftstoffs ein Rückschlagventil (40) aufweist, welches den Durchfluss von Kraftstoff allein in Richtung des Tanks (16) erlaubt.

15. Einspritzkreis (10) gemäß einem der vorhergehenden Ansprüche, **dadurch gekennzeichnet, dass** das zweite Elektroventil (24, 52) des Ableitungskreises in unmittelbarer Nähe der Einspritzleitung (26) und der Einspritzer (30) angeordnet ist, damit die Hitze den Kraftstoff verdampft bei Öffnung des zweiten Elektroventils (24, 52).

## Claims

1. Fuel injection circuit (10) for the engine of a motor vehicle, of the type which comprises, mounted in series from upstream to downstream, a low-pressure circuit (12) that comprises a tank (16) and a low-pressure pump (18), and a high-pressure circuit (14) in which a high-pressure pump (22) feeds electromagnetic injectors (30, 42) via a fuel rail (26), of the type in which the electromagnetic injectors (30, 42) are connected to first outlets (28) of the fuel rail (26), of the type in which at least one first solenoid valve (19, 21, 24) is interposed in the circuit (10), in order to determine an active state of the circuit (10) associated with the running of the engine, or in order to determine an inactive state of the circuit (10) associated with the stopping of the engine, of the type in which the injection circuit (10) comprises a pressure regulator (36) that, only when the circuit is in its active state, connects the high-pressure circuit (14) to a fuel return duct (38) in order to allow the return of the fuel to the vehicle's tank (16),
**characterized in that** it comprises, parallel to the pressure regulator (36), a branch circuit (44) that comprises a second solenoid valve (24, 52), such solenoid valve, only when the circuit (10) is in its inactive state, connecting the high-pressure circuit (14) and the fuel return duct (38) to cause a drop in residual fuel pressure in the high-pressure circuit (14).

2. Injection circuit (10) according to claim 1, **characterized in that** the pressure regulator (36) is interposed between a second outlet (32) of the fuel rail (26) and the fuel return duct (38).

3. Injection circuit (10) according to claim 2, **characterized in that** the branch circuit (44) is connected to the second outlet (32) of the fuel rail (26) and to the fuel return duct (38), and **in that** it is arranged in parallel with the pressure regulator (36).

4. Injection circuit (10) according to claim 3, **characterized in that** the branch circuit (44) comprises a non-return valve (46) arranged between the second solenoid valve and the fuel return duct (38).

5. Injection circuit (10) according to any one of the preceding claims, **characterized in that** the first solenoid valve (24) is interposed between the high-pressure pump (22) and the fuel rail (26).

6. Injection circuit (10) according to claim 5, **characterized in that** the first and second solenoid valves constitute a four-way valve (24).

7. Injection circuit (10) according to any one of claims 1 to 6, **characterized in that** the fuel is liquefied petroleum gas.

8. Injection circuit (10) according to claim 1, **characterized in that** the pressure regulator (36) is interposed between an outlet of the high-pressure pump (22) and the fuel return duct (38).

9. Injection circuit (10) according to claim 8, **characterized in that** the branch circuit (44) is connected to an upstream inlet (25) of the fuel rail (26) and to the fuel return duct (38).

10. Injection circuit (10) according to claim 8, **characterized in that** the branch circuit (44) is connected to the first downstream outlets (28) of the fuel rail (26) and to the fuel return duct (38).

11. Injection circuit (10) according to any one of claims 8 to 10, **characterized in that** each injector (30) comprises an outlet (50) that, only when the circuit is in its active state, is capable of being connected to the fuel return duct (38).

12. Injection circuit (10) according to any one of claims 8 to 11, **characterized in that** the fuel comprises dimethyl ether.

13. Injection circuit (10) according to any one of the preceding claims, **characterized in that** the operation of the second solenoid valve (24, 52) is associated with and contrary to that of the first solenoid valve (24, 21).

14. Injection circuit (10) according to any one of the preceding claims, **characterized in that** the fuel return duct (38) comprises a non-return valve (40) allowing the fuel to pass in the direction of the tank (16) only.

15. Injection circuit (10) according to any one of the preceding claims, **characterized in that** the second solenoid valve (24, 52) of the branch circuit is arranged in immediate proximity to the fuel rail (26) and injectors (30) so that the heat vaporizes the fuel when the second solenoid valve (24, 52) is opened.
